# EUROPEAN PATENT APPLICATION

(11) **EP 1 640 958 A2**
(43) Date of publication of application: **29.03.2006**
(21) Application number: 05255696.6
(22) Date of filing: 14.09.2005
(51) Int. Cl.: G09G 3/34

(54) **System with server based control of client device display features**

(30) Priority: 27.09.2004 US 614360 P; 01.04.2005 US 97509; 01.04.2005 US 96546; 01.04.2005 US 96547; 01.04.2005 US 97818; 01.04.2005 US 97819; 01.04.2005 US 97820
(71) Applicant: IDC, LLC, San Francisco, CA 94107 (US)
(72) Inventor: Sampsell, Jeffrey B., San Jose, California 95110 (US); Tyger, Karen, Foster City, California 94404 (US); Mathew, Mithran, Mountain View, California 94043 (US)
(74) Representative: Dunlop, Hugh Christopher

(57) **Abstract**

Systems and methods of controlling client display modes are disclosed. In one embodiment, an electronic device includes an array (20) of interferometric modulators, and an array driver (22) for the array of interferometric modulators. The array driver is configured to receive video data which at least a portion of is in an interlaced format, to identify a portion of the video data as interlaced format, and to render the identified video data in an interlaced format on the array of interferometric modulators. In another embodiment, a method of displaying information on a bi-stable display includes receiving video data at a device having an interlaced mode of displaying data and a non-interlaced mode of displaying data, identifying at least a portion of the video data as interlaced format, and displaying the interlaced video data on the bi-stable display In some embodiments the bi-stable display can be an array of interferometric modulators.

## Description

### Background

### Field of the Invention

The field of the invention relates to microelectromechanical systems (MEMS).

### Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed. For example, a bi-stable display has the ability to display data for a significantly long period of time with very little energy consumption. Using a bi-stable display, for example, a display having an array of interferometric modulators, can allow innovative refresh and update modes that take advantage of the of not having to refresh the display in the manner of current displays.

### Summary of Certain Embodiments

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

One embodiment includes a method of displaying information on a display having an array of interferometric modulators. The method comprises receiving video data at a device having an interlaced mode of displaying data and a non-interlaced mode of displaying data. The method also comprises identifying a portion of the video data as interlaced data and a portion of the video data as non-interlaced data. The method further comprises partitioning the array of interferometric modulators into at least a first and second region and displaying the interlaced video data in at least the first region of the display and displaying the non-interlaced data in at least the second region of the display.

Another embodiment includes a method comprising determining the characteristics of a display of a client device, selecting one or more display modes for the display of the client device based on the characteristics of the display, and sending video data to the client device over a communications network, the data being suitable for presentation in accordance with the selected display mode.

Another embodiment includes a system for displaying video data, the system comprising an array of interferometric modulators, and an array driver electrically connected to the array of interferometric modulators, the array driver configured to display interlaced and non-interlaced video data on the array, wherein the array driver displays the interlaced data in a first region of the display, and wherein the array driver displays non-interlaced video data in a second region of the display.

Another embodiment includes a system for displaying video data, the system comprising means for interferometrically modulating light, and means for driving the modulating means with interlaced and non-interlaced video data, wherein the driving means displays the video data in a first region of the display, and wherein the driving means displays non-interlaced video data in a second region of the display.

Another embodiment includes a system for displaying video data, the system comprising a server configured to provide video data, wherein at least a portion of the video data is in an interlaced format, and a client device comprising an array of interferometric modulators, and an array driver electrically connected to said an array of interferometric modulators, wherein said client device is configured to receive the video data from said server, to identify the portion of the video data in an interlaced format, and said array driver is configured to display interlaced and non-interlaced video data on the array, and wherein said client device is further configured to display the interlaced portion of the received video data on a first region of the array, and to display non-interlaced video data on a second region of the array.

Another embodiment includes a system for displaying video data, the system comprising means for providing video data, wherein at least a portion of the video data is in an interlaced format, and means for receiving the video data from the providing means and for identifying the portion of the video data in an interlaced format. The receiving and identifying means comprising means for interferometrically modulating light and means for driving the modulating means, the driving means being connected to the modulating means. The receiving and identifying means is configured to display interlaced and non-interlaced video data on the modulating means, and to display the interlaced portion of the received video data on a first region of the modulating means, and to display non-interlaced video data on a second region of modulating means.

Another embodiment includes a system for displaying information on a display having an array of interferometric modulators, the system comprising means for receiving video data at a device having an interlaced mode of displaying data and a non-interlaced mode of displaying data, means for identifying at least a portion of the video data as interlaced data and non-interlaced data, and means for displaying the interlaced data and non-interlaced data on a display of the device having an array of interferometric modulators. The interlaced data is displayed in a first region of the display and the non-interlaced data is displayed in a second region of the display.

Another embodiment includes a system of displaying information on a display having an array of interferometric modulators. The system comprises means for interferometrically modulating light, means for determining the characteristics of the modulating means and for selecting one or more display modes for the modulating means based on the determined characteristics of the modulating means, wherein said determining means and selecting means are disposed in a system in data communication with the modulating means, and means for transmitting video data to the modulating means, the video data being configured for display in the selected display mode.

Another embodiment includes a system displaying information, comprising a display having an array of interferometric modulators, a server configured to determine the characteristics of a display, and further configured to select one or more display modes for the display based on the determined characteristics of the display, and a communications network coupled to said server and said display, said communication network being suitable for transmitting video data to the display in the selected display mode.

Another embodiment includes a method of manufacturing a system for displaying video data. The method comprises providing a display comprising an array of interferometric modulators and providing an array driver electrically connected to the display, the array driver configured to display interlaced and non-interlaced video data in separate portions of the array.

Another embodiment includes a method of manufacturing a system for displaying video data. The method comprises providing a server configured to provide video data over a communications network, wherein at least a portion of the video data is in an interlaced format, and providing a client device configured to receive video data over the communications network. The method comprises an array of interferometric modulators and an array driver electrically connected to said an array of interferometric modulators. The client device is further configured to distinguish the portions of the video data in an interlaced format and in a non-interlaced format, and said array driver is configured to concurrently display interlaced and non-interlaced video data on the array.

### Brief Description of the Drawings

Figure 1 illustrates a networked system of one embodiment.
Figure 2 is an isometric view depicting a portion of one embodiment of an interferometric modulator display array in which a movable reflective layer of a first interferometric modulator is in a released position and a movable reflective layer of a second interferometric modulator is in an actuated position.
Figure 3A is a system block diagram illustrating one embodiment of an electronic device incorporating a 3x3 interferometric modulator display array.
Figure 3B is an illustration of an embodiment of a client of the server-based wireless network system of Figure 1.
Figure 3C is an exemplary block diagram configuration of the client in Figure 3B.
Figure 4A is a diagram of movable mirror position versus applied voltage for one exemplary embodiment of an interferometric modulator of Figure 2.
Figure 4B is an illustration of a set of row and column voltages that may be used to drive an interferometric modulator display array.
Figure 5A illustrates one exemplary frame of display data in the 3x3 interferometric modulator display of Figure 3A.
Figure 5B illustrates one exemplary timing diagram for row and column signals that may be used to write the frame of Figure 5A.
Figure 6A is a cross section of the interferometric modulator of Figure 2.
Figure 6B is a cross section of an alternative embodiment of an interferometric modulator.
Figure 6C is a cross section of another alternative embodiment of an interferometric modulator.
Figure 7 is a high level flowchart of a client control process.
Figure 8 is a flowchart of a client control process for launching and running a receive/display process.
Figure 9 is a flowchart of a server control process for sending video data to a client.
Figure 10 is a flow chart of one embodiment of a system and method for server driven control of client device display features;
Figure 11A illustrates one embodiment of updating a typical display with video data.
Figure 11B illustrates one embodiment of updating an interferometric modulator display with video data.
Figure 12 illustrates a plan view of one embodiment of an interferometric modulator display 300 that is partitioned into three fields.
Figure 13A is a schematic diagram illustrating an array driver that is configured to use an area update optimization process.
Figure 13B is a schematic diagram illustrating a controller that can be integrated with an array driver.
Figure 14 illustrates one embodiment of a display system providing the ability to directly process interleaved data streams.
Figure 15 illustrates a process for displaying interlaced data on an array of interferometric modulators.
Figure 16 illustrates one example of a server-provided message.

### Detailed Description of Certain Embodiments

The following detailed description is directed to certain specific embodiments. However, the invention can be embodied in a multitude of different ways. Reference in this specification to "one embodiment" or "an embodiment" means that a particular feature, structure, or characteristic described in connection with the embodiment is included in at least one embodiment. The appearances of the phrase "in one embodiment," "according to one embodiment," or "in some embodiments" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

In one embodiment, a display array on a device includes at least one driving circuit and an array of means, e.g., interferometric modulators, on which video data is displayed. Video data, as used herein, refers to any kind of displayable data, including pictures, graphics, and words, displayable in either static or dynamic images (for example, a series of video frames that when viewed give the appearance of movement, e.g., a continuous ever-changing display of stock quotes, a "video clip", or data indicating the occurrence of an event of action). Video data, as used herein, also refers to any kind of control data, including instructions on how the video data is to be processed (display mode), such as frame rate, and data format. The array is driven by the driving circuit to display video data.

Data is typically shown on a conventional display (e.g., a CRT, a LCD) in a single mode based on the characteristics of the display. A bi-stable display has the ability to display data for a significantly long period of time with very little energy consumption. Using a bi-stable display, for example, a display having an array of interferometric modulators, can allow innovative refresh and update modes that take advantage of not having to refresh the display unless the displayed data actually changes. One of the display modes of a bi-stable display, such as an interferometric modulator display, is "interlacing" mode. Typically, interlacing refers to a video data display methodology where a conventional display is updated or refreshed by alternately writing all the odd rows of a display for a first video data frame, and then in the next successive video data frame, writing all the even number rows for the next frame. For example, for a set of video data frames 1 - 6, the odd rows R1, R3, R5, and R7, etc., are written for frames 1, 3, and 5, and the even rows R2, R4, R6, etc., are written for frames 2, 4, and 6. Thus, in an interlaced format, halves of the total rows on the display are refreshed or updated in an alternating manner such that, for example, each odd or even row is refreshed or updated every other cycle. Because of the relatively frequent constant refreshing required with conventional displays, in many applications this raw interlaced data is processed into what is known as a progressive format which requires interpolating and merging the displayed interlaced lines of video data to form a suitable image for viewing. In contrast to a conventional display, an interferometric modulator display does not require constant refreshing to maintain an image. During a refresh cycle of interlaced data, where half of the rows are being refreshed or updated, the interferometric modulator display maintains the other half of the rows in their previously written state. This implementation can simplify the image processing circuits for the display and results in reduced power consumption in both the display and display circuitry.

In this description, reference is made to the drawings wherein like parts are designated with like numerals throughout. The invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

Spatial light modulators used for imaging applications come in many different forms. Transmissive liquid crystal display (LCD) modulators modulate light by controlling the twist and/or alignment of crystalline materials to block or pass light. Reflective spatial light modulators exploit various physical effects to control the amount of light reflected to the imaging surface. Examples of such reflective modulators include reflective LCDs, and digital micromirror devices.

Another example of a spatial light modulator is an interferometric modulator that modulates light by interference. Interferometric modulators are bi-stable display elements which employ a resonant optical cavity having at least one movable or deflectable wall. Constructive interference in the optical cavity determines the color of the viewable light emerging from the cavity. As the movable wall, typically comprised at least partially of metal, moves towards the stationary front surface of the cavity, the interference of light within the cavity is modulated, and that modulation affects the color of light emerging at the front surface of the modulator. The front surface is typically the surface where the image seen by the viewer appears, in the case where the interferometric modulator is a direct-view device.

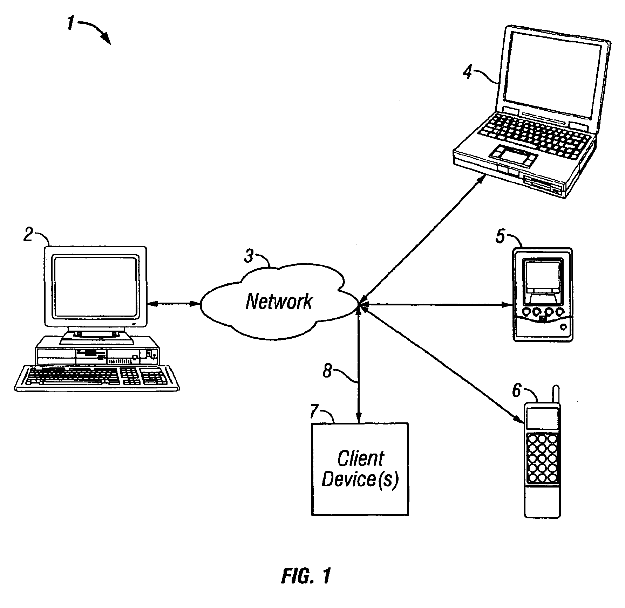

Figure 1 illustrates a networked system in accordance with one embodiment. A server 2, such as a Web server is operatively coupled to a network 3. The server 2 can correspond to a Web server, to a cell-phone server, to a wireless e-mail server, and the like. The network 3 can include wired networks, or wireless networks, such as WiFi networks, cell-phone networks, Bluetooth networks, and the like.

The network 3 can be operatively coupled to a broad variety of devices. Examples of devices that can be coupled to the network 3 include a computer such as a laptop computer 4, a personal digital assistant (PDA) 5, which can include wireless handheld devices such as the BlackBerry, a Palm Pilot, a Pocket PC, and the like, and a cell phone 6, such as a Web-enabled cell phone, Smartphone, and the like. Many other devices can be used, such as desk-top PCs, set-top boxes, digital media players, handheld PCs, Global Positioning System (GPS) navigation devices, automotive displays, or other stationary and mobile displays. For convenience of discussion all of these devices are collectively referred to herein as the client device 7.

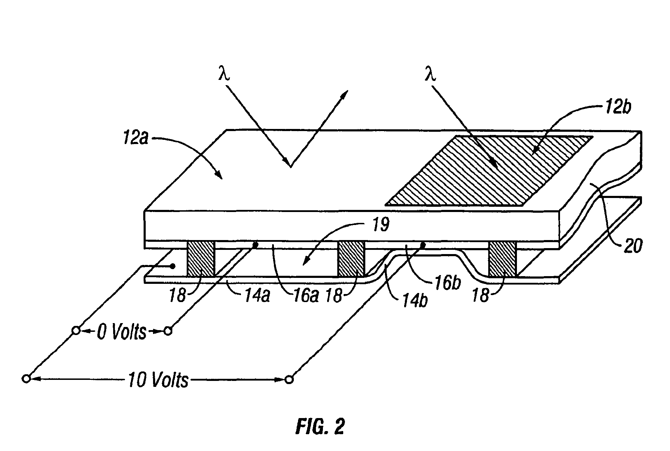

One bi-stable display element embodiment comprising an interferometric MEMS display element is illustrated in Figure 2. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 2 is an isometric view depicting two adjacent pixels in a series of pixels of a visual display array, wherein each pixel comprises a MEMS interferometric modulator. In some embodiments, an interferometric modulator display array comprises a row/column array of these interferometric modulators. Each interferometric modulator includes a pair of reflective layers positioned at a variable and controllable distance from each other to form a resonant optical cavity with at least one variable dimension. In one embodiment, one of the reflective layersmay be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 2 includes two adjacent interferometric modulators 12a and 12b. In the interferometric modulator 12a on the left, a movable and highly reflective layer 14a is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The partially reflective layers 16a, 16b are electrically conductive, partially transparent and fixed, and may be fabricated, for example, by depositing one or more layers each of chromium and indium-tin-oxide onto a transparent substrate 20. The layers are patterned into parallel strips, and may form row electrodes in a display device as described further below. The highly reflective layers 14a, 14b may be formed as a series of parallel strips of a deposited metal layer or layers (orthogonal to the row electrodes, partially reflective layers 16a, 16b) deposited on top of supports 18 and an intervening sacrificial material deposited between the supports 18. When the sacrificial material is etched away, the deformable metal layers are separated from the fixed metal layers by a defined air gap 19. A highly conductive and reflective material such as aluminum may be used for the deformable layers, and these strips may form column electrodes in a display device.

With no applied voltage, the air gap 19 remains between the layers 14a, 16a and the deformable layer is in a mechanically relaxed state as illustrated by the interferometric modulator 12a in Figure 2. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the interferometric modulator 12b on the right in Figure 2. The behavior is the same regardless of the polarity of the applied potential difference. In this way, row/column actuation that can control the reflective vs. non-reflective interferometric modulator states is analogous in many ways to that used in conventional LCD and other display technologies.

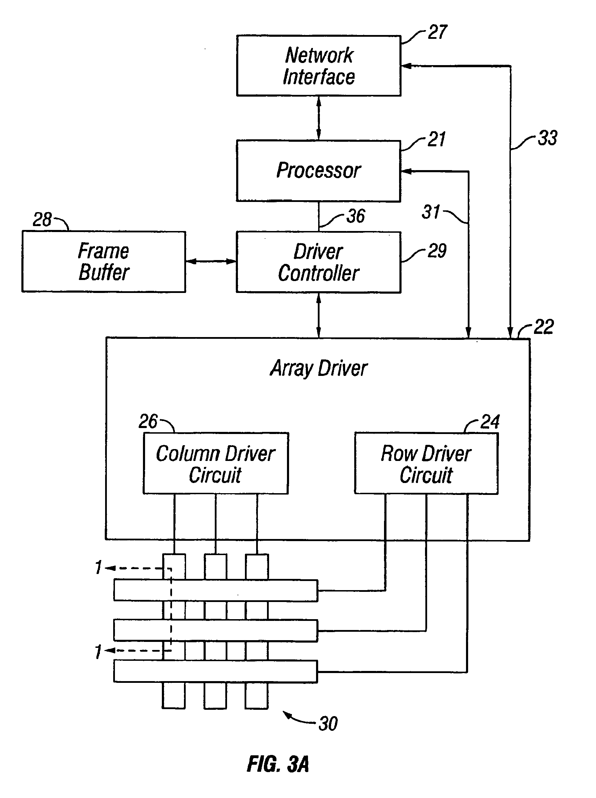

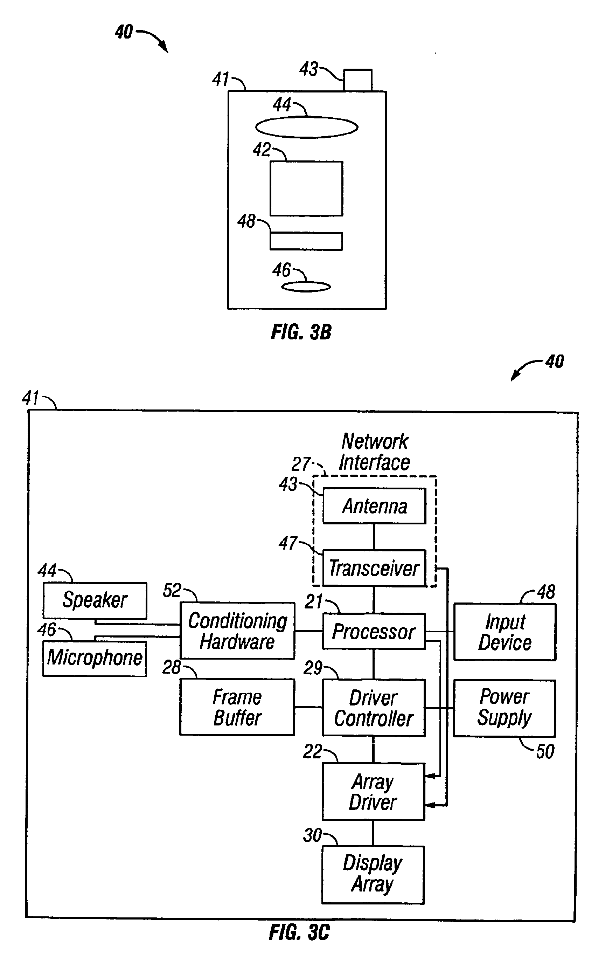

Figures 3 through 5B illustrate an exemplary process and system for using an array of interferometric modulators in a display application. However, the process and system can also be applied to other displays, e.g., plasma, EL, OLED, STN LCD, and TFT LCD.

Currently, available flat panel display controllers and drivers have been designed to work almost exclusively with displays that need to be constantly refreshed. Thus, the image displayed on plasma, EL, OLED, STN LCD, and TFT LCD panels, for example, will disappear in a fraction of a second if not refreshed many times within a second. However, because interferometric modulators of the type described above have the ability to hold their state for a longerperiod of time without refresh, wherein the state of the interferometric modulators may be maintained in either of two states without refreshing, a display that uses interferometric modulators may be referred to as a bi-stable display. In one embodiment, the state of the pixel elements is maintained by applying a bias voltage, sometimes referred to as a latch voltage, to the one or more interferometric modulators that comprise the pixel element.

In general, a display device typically requires one or more controllers and driver circuits for proper control of the display device. Driver circuits, such as those used to drive LCD's, for example, may be bonded directly to, and situated along the edge of the display panel itself. Alternatively, driver circuits may be mounted on flexible circuit elements connecting the display panel (at its edge) to the rest of an electronic system. In either case, the drivers are typically located at the interface of the display panel and the remainder of the electronic system.

Figure 3A is a system block diagram illustrating some embodiments of an electronic device that can incorporate various aspects. In the exemplary embodiment, the electronic device includes a processor 21 which may be any general purpose single- or multi-chip microprocessor such as an ARM, Pentium® , Pentium II® , Pentium III® , Pentium IV® , Pentium® Pro, an 8051, a MIPS® , a Power PC® , an ALPHA® , or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

Figure 3A illustrates an embodiment of electronic device that includes a network interface 27 connected to a processor 21 and, according to some embodiments, the network interface can be connected to an array driver 22. The network interface 27 includes the appropriate hardware and software so that the device can interact with another device over a network, for example, the server 2 shown in Figure 1. The processor 21 is connected to driver controller 29 which is connected to an array driver 22 and to frame buffer 28. In some embodiments, the processor 21 is also connected to the array driver 22. The array driver 22 is connected to and drives the display array 30. The components illustrated in Figure 3A illustrate a configuration of an interferometric modulator display. However, this configuration can also be used in a LCD with an LCD controller and driver. As illustrated in Figure 3A, the driver controller 29 is connected to the processor 21 via a parallel bus 36. Although a driver controller 29, such as a LCD controller, is often associated with the system processor 21, as a stand-alone Integrated Circuit (IC), such controllers may be implemented in many ways. They may be embedded in the processor 21 as hardware, embedded in the processor 21 as software, or fully integrated in hardware with the array driver 22. In one embodiment, the driver controller 29 takes the display information generated by the processor 21, reformats that information appropriately for high speed transmission to the display array 30, and sends the formatted information to the array driver 22.

The array driver 22 receives the formatted information from the driver controller 29 and reformats the video data into a parallel set of waveforms that are applied many times per second to the hundreds and sometimes thousands of leads coming from the display's x-y matrix of pixels. The currently available flat panel display controllers and drivers such as those described immediately above have been designed to work almost exclusively with displays that need to be constantly refreshed. Because bi-stable displays (e.g., an array of interferometric modulators) do not require such constant refreshing, features that decrease power requirements may be realized through the use of bi-stable displays. However, if bi-stable displays are operated by the controllers and drivers that are used with current displays the advantages of a bi-stable display may not be optimized. Thus, improved controller and driver systems and methods for use with bi-stable displays are desired. For high speed bi-stable displays, such as the interferometric modulators described above, these improved controllers and drivers preferably implement low-refresh-rate modes, video rate refresh modes, and unique modes to facilitate the unique capabilities of bi-stable modulators. According to the methods and systems described herein, a bi-stable display may be configured to reduce power requirements in various manners.

In one embodiment illustrated by Figure 3A, the array driver 22 receives video data from the processor 21 via a data link 31 bypassing the driver controller 29. The data link 31 may comprise a serial peripheral interface ("SPI"), I²C bus, parallel bus, or any other available interface. In one embodiment shown in Figure 3A, the processor 21 provides instructions to the array driver 22 that allow the array driver 22 to optimize the power requirements of the display array 30 (e.g., an interferometric modulator display). In one embodiment, video data intended for a portion of the display, such as for example defined by the server 2, can be identified by data packet header information and transmitted via the data link 31. In addition, the processor 21 can route primitives, such as graphical primitives, along data link 31 to the array driver 22. These graphical primitives can correspond to instructions such as primitives for drawing shapes and text.

Still referring to Figure 3A, in one embodiment, video data may be provided from the network interface 27 to the array driver 22 via data link 33. In one embodiment, the network interface 27 analyzes control information that is transmitted from the server 2 and determines whether the incoming video should be routed to either the processor 21 or, alternatively, the array driver 22.

In one embodiment, video data provided by data link 33 is not stored in the frame buffer 28, as is usually the case in many embodiments. It will also be understood that in some embodiments, a second driver controller (not shown) can also be used to render video data for the array driver 22. The data link 33 may comprise a SPI, I²C bus, or any other available interface. The array driver 22 can also include address decoding, row and column drivers for the display and the like. The network interface 27 can also provide video data directly to the array driver 22 at least partially in response to instructions embedded within the video data provided to the network interface 27. It will be understood by the skilled practitioner that arbiter logic can be used to control access by the network interface 27 and the processor 21 to prevent data collisions at the array driver 22. In one embodiment, a driver executing on the processor 21 controls the timing of data transfer from the network interface 27 to the array driver 22 by permitting the data transfer during time intervals that are typically unused by the processor 21, such as time intervals traditionally used for vertical blanking delays and/or horizontal blanking delays.

Advantageously, this design permits the server 2 to bypass the processor 21 and the driver controller 29, and to directly address a portion of the display array 30. For example, in the illustrated embodiment, this permits the server 2 to directly address a predefined display array area of the display array 30. In one embodiment, the amount of data communicated between the network interface 27 and the array driver 22 is relatively low and is communicated using a serial bus, such as an Inter-Integrated Circuit (I²C) bus or a Serial Peripheral Interface (SPI) bus. It will also be understood, however, that where other types of displays are utilized, that other circuits will typically also be used. The video data provided via data link 33 can advantageously be displayed without a frame buffer 28 and with little or no intervention from the processor 21.

Figure 3A also illustrates a configuration of a processor 21 coupled to a driver controller 29, such as an interferometric modulator controller. The driver controller 29 is coupled to the array driver 22, which is connected to the display array 30. In this embodiment, the driver controller 29 accounts for the display array 30 optimizations and provides information to the array driver 22 without the need for a separate connection between the array driver 22 and the processor 21. In some embodiments, the processor 21 can be configured to communicate with a driver controller 29, which can include a frame buffer 28 for temporary storage of one or more frames of video data.

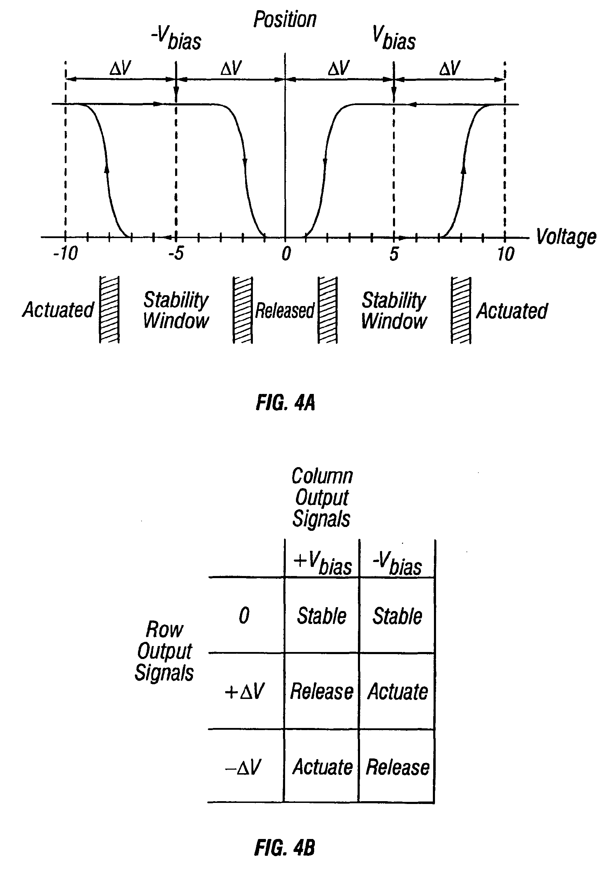

As shown in Figure 3A, in one embodiment the array driver 22 includes a row driver circuit 24 and a column driver circuit 26 that provide signals to a pixel display array 30. The cross section of the array illustrated in Figure 2 is shown by the lines 1-1 in Figure 3A. For MEMS interferometric modulators, the row/column actuation protocol may take advantage of a hysteresis property of these devices illustrated in Figure 4A. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 4A, the movable layer does not release completely until the voltage drops below 2 volts. There is thus a range of voltage, about 3 to 7 V in the example illustrated in Figure 4A, where there exists a window of applied voltage within which the device is stable in either the released or actuated state. This is referred to herein as the "hysteresis window" or "stability window."

For a display array having the hysteresis characteristics of Figure 4A, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 2 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new video data by continually repeating this process at some desired number of frames per second. A wide variety of protocols for driving row and column electrodes of pixel arrays to produce display array frames are also well known and may be used.

One embodiment of a client device 7 is illustrated in Figure 3B. The exemplary client 40 includes a housing 41, a display 42, an antenna 43, a speaker 44, an input device 48, and a microphone 46. The housing 41 is generally formed from any of a variety of manufacturing processes as are well known to those of skill in the art, including injection molding, and vacuum forming. In addition, the housing 41 may be made from any of a variety of materials, including but not limited to plastic, metal, glass, rubber, and ceramic, or a combination thereof. In one embodiment the housing 41 includes removable portions (not shown) that may be interchanged with other removable portions of different color, or containing different logos, pictures, or symbols.

The display 42 of exemplary client 40 may be any of a variety of displays, including a bi-stable display, as described herein with respect to, for example, Figures 2, 3A, and 4-6. In other embodiments, the display 42 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 42 includes an interferometric modulator display, as described herein.

The components of one embodiment of exemplary client 40 are schematically illustrated in Figure 3C. The illustrated exemplary client 40 includes a housing 41 and can include additional components at least partially enclosed therein. For example, in one embodiment, the client exemplary 40 includes a network interface 27 that includes an antenna 43 which is coupled to a transceiver 47. The transceiver 47 is connected to a processor 21, which is connected to conditioning hardware 52. The conditioning hardware 52 is connected to a speaker 44 and a microphone 46. The processor 21 is also connected to an input device 48 and a driver controller 29. The driver controller 29 is coupled to a frame buffer 28, and to an array driver 22, which in turn is coupled to a display array 30. A power supply 50 provides power to all components as required by the particular exemplary client 40 design.

The network interface 27 includes the antenna 43, and the transceiver 47 so that the exemplary client 40 can communicate with another device over a network 3, for example, the server 2 shown in Figure 1. In one embodiment the network interface 27 may also have some processing capabilities to relieve requirements of the processor 21. The antenna 43 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 47 pre-processes the signals received from the antenna 43 so that they may be received by and further processed by the processor 21. The transceiver 47 also processes signals received from the processor 21 so that they may be transmitted from the exemplary client 40 via the antenna 43.

Processor 21 generally controls the overall operation of the exemplary client 40, although operational control may be shared with or given to the server 2 (not shown), as will be described in greater detail below. In one embodiment, the processor 21 includes a microcontroller, CPU, or logic unit to control operation of the exemplary client 40. Conditioning hardware 52 generally includes amplifiers and filters for transmitting signals to the speaker 44, and for receiving signals from the microphone 46. Conditioning hardware 52 may be discrete components within the exemplary client 40, or may be incorporated within the processor 21 or other components.

The input device 48 allows a user to control the operation of the exemplary client 40. In one embodiment, input device 48 includes a keypad, such as a QWERTY keyboard or a telephone keypad, a button, a switch, a touch-sensitive screen, a pressure- or heat-sensitive membrane. In one embodiment, a microphone is an input device for the exemplary client 40. When a microphone is used to input data to the device, voice commands may be provided by a user for controlling operations of the exemplary client 40.

In one embodiment, the driver controller 29, array driver 22, and display array 30 are appropriate for any of the types of displays described herein. For example, in one embodiment, driver controller 29 is a conventional display controller or a bi-stable display controller (e.g., an interferometric modulator controller). In another embodiment, array driver 22 is a conventional driver or a bi-stable display driver (e.g., a interferometric modulator display). In yet another embodiment, display array 30 is a typical display array or a bi-stable display array (e.g., a display including an array of interferometric modulators).

Power supply 50 is any of a variety of energy storage devices as are well known in the art. For example, in one embodiment, power supply 50 is a rechargeable battery, such as a nickel-cadmium battery or a lithium ion battery. In another embodiment, power supply 50 is a renewable energy source, a capacitor, or a solar cell, including a plastic solar cell, and solar-cell paint. In another embodiment, power supply 50 is configured to receive power from a wall outlet.

In one embodiment, the array driver 22 contains a register that may be set to a predefined value to indicate that the input video stream is in an interlaced format and should be displayed on the bi-stable display in an interlaced format, without converting the video stream to a progressive scanned format. In this way the bi-stable display does not require interlace-to-progressive scan conversion of interlace video data.

In some implementations control programmability resides, as described above, in a display controller which can be located in several places in the electronic display system. In some cases control programmability resides in the array driver 22 located at the interface between the electronic display system and the display component itself. Those of skill in the art will recognize that the above-described optimization may be implemented in any number of hardware and/or software components and in various configurations.

In one embodiment, circuitry is embedded in the array driver 22 to take advantage of the fact that the output signal set of most graphics controllers includes a signal to delineate the horizontal active area of the display array 30 being addressed. This horizontal active area can be changed via register settings in the driver controller 29. These register settings can be changed by the processor 21. This signal is usually designated as display enable (DE). Most all display video interfaces in addition utilize a line pulse (LP) or a horizontal synchronization (HSYNC) signal, which indicates the end of a line of data. A circuit which counts LPs can determine the vertical position of the current row. When refresh signals are conditioned upon the DE from the processor 21 (signaling for a horizontal region), and upon the LP counter circuit (signaling for a vertical region) an area update function can be implemented.

In one embodiment, a driver controller 29 is integrated with the array driver 22. Such an embodiment is common in highly integrated systems such as cellular phones, watches, and other small area displays. Specialized circuitry within such an integrated array driver 22 first determines which pixels and hence rows require refresh, and only selects those rows that have pixels that have changed to update. With such circuitry, particular rows can be addressed in non-sequential order, on a changing basis depending on image content. This embodiment has the advantage that since only the changed video data needs to be sent through the interface, data rates can be reduced between the processor 21 and the display array 30. Lowering the effective data rate required between processor 21 and array driver 22 improves power consumption, noise immunity and electromagnetic interference issues for the system.

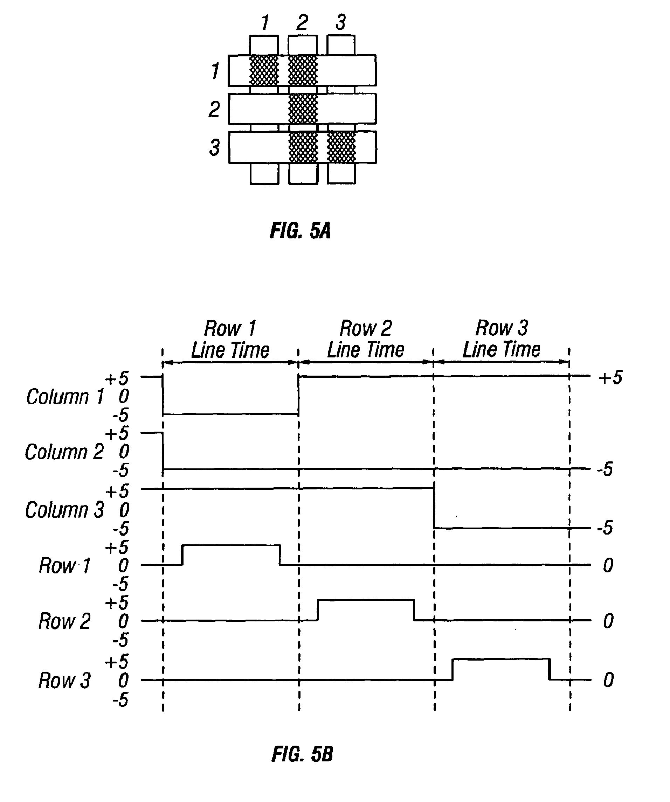

Figures 4 and 5 illustrate one possible actuation protocol for creating a display frame on the 3x3 array of Figure 3. Figure 4B illustrates a possible set of column and row voltage levels that may be used for pixels exhibiting the hysteresis curves of Figure 4A. In the Figure 4A/4B embodiment, actuating a pixel may involve setting the appropriate column to-V_{bias}, and the appropriate row to +ΔV, which may correspond to -5 volts and +5 volts respectively. Releasing the pixel may be accomplished by setting the appropriate column to +V_{bias}, and the appropriate row to the same +ΔV, producing a zero volt potential difference across the pixel. In those rows where the row voltage is held at zero volts, the pixels are stable in whatever state they were originally in, regardless of whether the column is at +V_{bias}, or -V_{bias}. Similarly, actuating a pixel may involve setting the appropriate column to +V_{bias}, and the appropriate row to -ΔV, which may correspond to 5 volts and -5 volts respectively. Releasing the pixel may be accomplished by setting the appropriate column to -V_{bias}, and the appropriate row to the same - ΔV, producing a zero volt potential difference across the pixel. In those rows where the row voltage is held at zero volts, the pixels are stable in whatever state they were originally in, regardless of whether the column is at +V_{bias}, or -V_{bias}.

Figure 5B is a timing diagram showing a series of row and column signals applied to the 3x3 array of Figure 3A which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to-5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used.

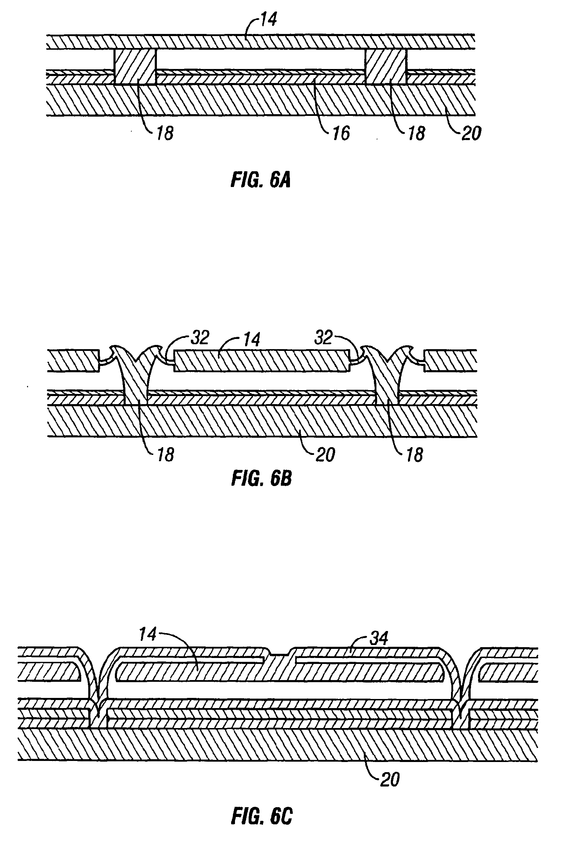

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 2, where a strip of reflective material 14 is deposited on orthogonal supports 18. In Figure 6B, the reflective material 14 is attached to supports 18 at the corners only, on tethers 32. In Figure 6C, the reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929. A wide variety of well known techniques may be used to produce the above described structures involving a series of material deposition, patterning, and etching steps.

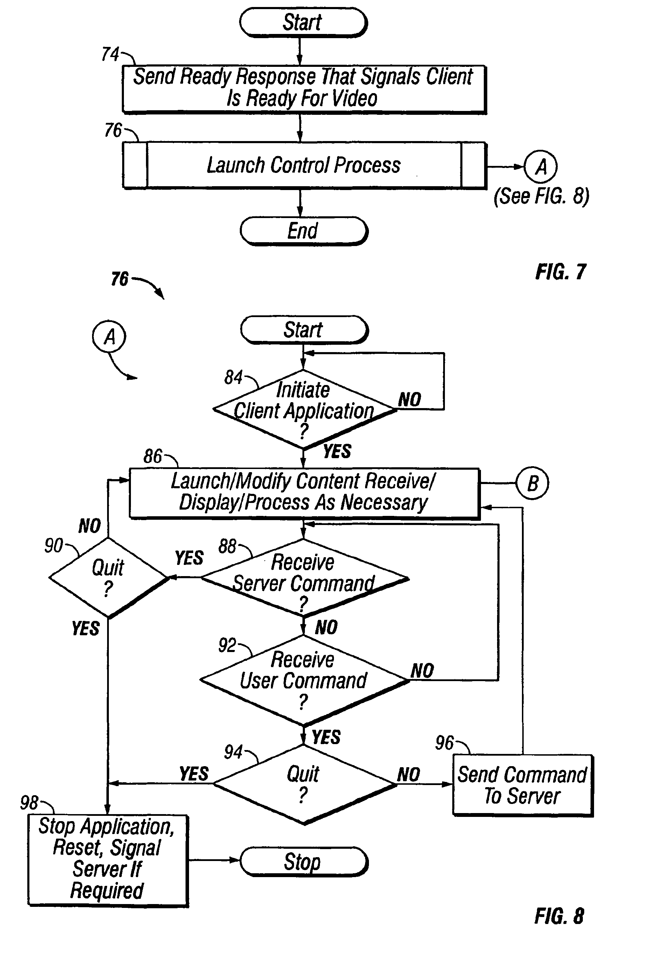

An embodiment of process flow is illustrated in Figure 7, which shows a high-level flowchart of a client device 7 control process. This flowchart describes the process used by a client device 7, such as a laptop computer 4, a PDA 5, or a cell phone 6, connected to a network 3, to graphically display video data, received from a server 2 via the network 3. Depending on the embodiment, states of Figure 7 can be removed, added, or rearranged.

Again referring to Figure 7, starting at state 74 the client device 7 sends a signal to the server 2 via the network 3 that indicates the client device 7 is ready for video. In one embodiment a user may start the process of Figure 7 by turning on an electronic device such as a cell phone. Continuing to state 76 the client device 7 launches its control process. An example of launching a control process is discussed further with reference to Figure 8.

An embodiment of process flow is illustrated in Figure 8, which shows a flowchart of a client device 7 control process for launching and running a control process. This flowchart illustrates in further detail state 76 discussed with reference to Figure 7. Depending on the embodiment, states of Figure 8 can be removed, added, or rearranged.

Starting at decision state 84, the client device 7 makes a determination whether an action at the client device 7 requires an application at the client device 7 to be started, or whether the server 2 has transmitted an application to the client device 7 for execution, or whether the server 2 has transmitted to the client device 7 a request to execute an application resident at the client device 7. If there is no need to launch an application the client device 7 remains at decision state 84. After starting an application, continuing to state 86, the client device 7 launches a process by which the client device 7 receives and displays video data. The video data may stream from the server 2, or may be downloaded to the client device 7 memory for later access. The video data can be video, or a still image, or textual or pictorial information. The video data can also have various compression encodings, and be interlaced or progressively scanned, and have various and varying refresh rates. The display array 30 may be segmented into regions of arbitrary shape and size, each region receiving video data with characteristics, such as refresh rate or compression encoding, specific only to that region. The regions may change video data characteristics and shape and size. The regions may be opened and closed and re-opened. Along with video data, the client device 7 can also receive control data. The control data can comprise commands from the server 2 to the client device 7 regarding, for example, video data characteristics such as compression encoding, refresh rate, and interlaced or progressively scanned video data. The control data may contain control instructions for segmentation of display array 30, as well as differing instructions for different regions of display array 30.

In one exemplary embodiment, the server 2 sends control and video data to a PDA via a wireless network 3 to produce a continuously updating clock in the upper right corner of the display array 30, a picture slideshow in the upper left corner of the display array 30, a periodically updating score of a ball game along a lower region of the display array 30, and a cloud shaped bubble reminder to buy bread continuously scrolling across the entire display array 30. The video data for the photo slideshow are downloaded and reside in the PDA memory, and they are in an interlaced format. The clock and the ball game video data stream text from the server 2. The reminder is text with a graphic and is in a progressively scanned format. It is appreciated that here presented is only an exemplary embodiment. Other embodiments are possible and are encompassed by state 86 and fall within the scope of this discussion.

Continuing to decision state 88, the client device 7 looks for a command from the server 2, such as a command to relocate a region of the display array 30, a command to change the refresh rate for a region of the display array 30, or a command to quit. Upon receiving a command from the server 2, the client device 7 proceeds to decision state 90, and determines whether or not the command received while at decision state 88 is a command to quit. If, while at decision state 90, the command received while at decision state 88 is determined to be a command to quit, the client device 7 continues to state 98, and stops execution of the application and resets. The client device 7 may also communicate status or other information to the server 2, and/or may receive such similar communications from the server 2. If, while at decision state 90, the command received from the server 2 while at decision state 88 is determined to not be a command to quit, the client device 7 proceeds back to state 86. If, while at decision state 88, a command from the server 2 is not received, the client device 7 advances to decision state 92, at which the client device 7 looks for a command from the user, such as a command to stop updating a region of the display array 30, or a command to quit. If, while at decision state 92, the client device 7 receives no command from the user, the client device 7 returns to decision state 88. If, while at decision state 92, a command from the user is received, the client device 7 proceeds to decision state 94, at which the client device 7 determines whether or not the command received in decision state 92 is a command to quit. If, while at decision state 94, the command from the user received while at decision state 92 is not a command to quit, the client device 7 proceeds from decision state 94 to state 96. At state 96 the client device 7 sends to the server 2 the user command received while at state 92, such as a command to stop updating a region of the display array 30, after which it returns to decision state 88. If, while at decision state 94, the command from the user received while at decision state 92 is determined to be a command to quit, the client device 7 continues to state 98, and stops execution of the application. The client device 7 may also communicate status or other information to the server 2, and/or may receive such similar communications from the server 2.

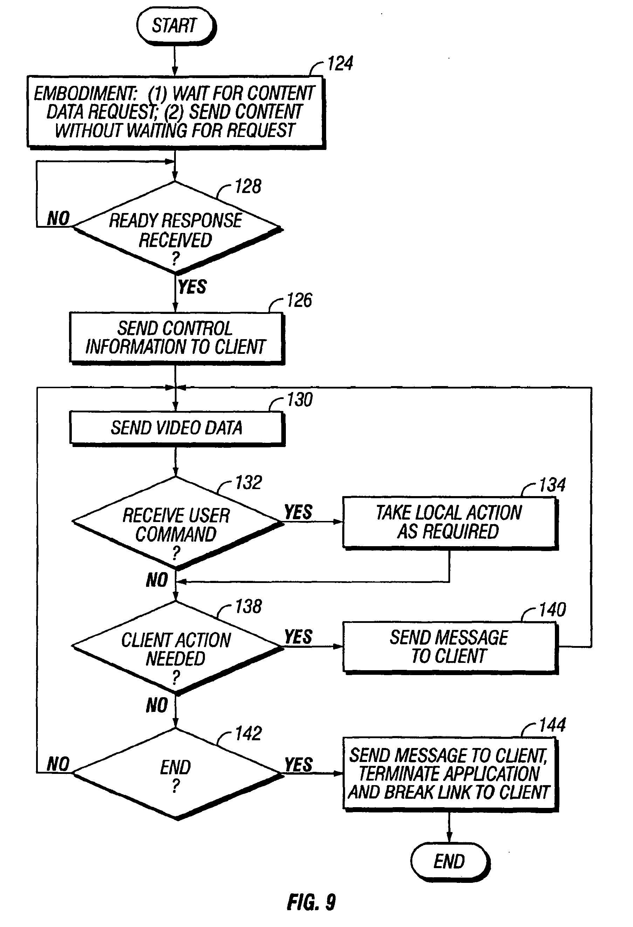

Figure 9 illustrates a control process by which the server 2 sends video data to the client device 7. The server 2 sends control information and video data to the client device 7 for display. Depending on the embodiment, states of Figure 9 can be removed, added, or rearranged.

Starting at state 124 the server 2, in embodiment (1), waits for a data request via the network 3 from the client device 7, and alternatively, in embodiment (2) the server 2 sends video data without waiting for a data request from the client device 7. The two embodiments encompass scenarios in which either the server 2 or the client device 7 may initiate requests for video data to be sent from the server 2 to the client device 7.

The server 2 continues to decision state 128, at which a determination is made as to whether or not a response from the client device 7 has been received indicating that the client device 7 is ready (ready indication signal). If, while at state 128, a ready indication signal is not received, the server 2 remains at decision state 128 until a ready indication signal is received.

Once a ready indication signal is received, the server 2 proceeds to state 126, at which the server 2 sends control data to the client device 7. The control data may stream from the server 2, or may be downloaded to the client device 7 memory for later access. The control data may segment the display array 30 into regions of arbitrary shape and size, and may define video data characteristics, such as refresh rate or interlaced format for a particular region or all regions. The control data may cause the regions to be opened or closed or re-opened.

Continuing to state 130, the server 2 sends video data. The video data may stream from the server 2, or may be downloaded to the client device 7 memory for later access. The video data can include motion images, or still images, textual or pictorial images. The video data can also have various compression encodings, and be interlaced or progressively scanned, and have various and varying refresh rates. Each region may receive video data with characteristics, such as refresh rate or compression encoding, specific only to that region.

The server 2 proceeds to decision state 132, at which the server 2 looks for a command from the user, such as a command to stop updating a region of the display array 30, to increase the refresh rate, or a command to quit. If, while at decision state 132, the server 2 receives a command from the user, the server 2 advances to state 134. At state 134 the server 2 executes the command received from the user at state 132, and then proceeds to decision state 138. If, while at decision state 132, the server 2 receives no command from the user, the server 2 advances to decision state 138.

At state 138 the server 2 determines whether or not action by the client device 7 is needed, such as an action to receive and store video data to be displayed later, to increase the data transfer rate, or to expect the next set of video data to be in interlaced format. If, while at decision state 138, the server 2 determines that an action by the client is needed, the server 2 advances to state 140, at which the server 2 sends a command to the client device 7 to take the action, after which the server 2 then proceeds to state 130. If, while at decision state 138, the server 2 determines that an action by the client is not needed, the server 2 advances to decision state 142.

Continuing at decision state 142, the server 2 determines whether or not to end data transfer. If, while at decision state 142, the server 2 determines to not end data transfer, server 2 returns to state 130. If, while at decision state 142, the server 2 determines to end data transfer, server 2 proceeds to state 144, at which the server 2 ends data transfer, and sends a quit message to the client. The server 2 may also communicate status or other information to the client device 7, and/or may receive such similar communications from the client device 7.

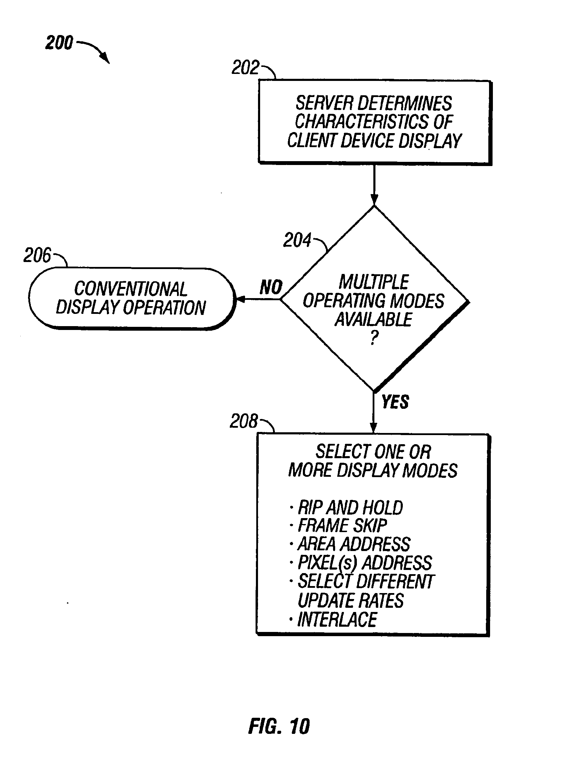

Figure 10 illustrates a flowchart of one embodiment of a process 200 of operating the system shown in Figures 1 and 3A. The process 200 shown in Figure 10 can be used in a system, for example the system shown in Figure 1, where a server 2 communicates with numerous client devices 7 and each client device 7 has a display that may or may not have similar operating characteristics as the displays on the other client devices. The process 200 illustrates the server 2 determining characteristics of the display of a client device 7 and if the display is capable of using multiple operating modes and then utilizing one or more of the displays' operating modes to display data. To determine the display type of its client devices 7, the server 2 can receive information indicating the display characteristics of each client device 7. In some embodiments, determining the display characteristics of the client device 7 occurs while the client device 7 is establishing communications with the server 2, for example, as part of a server-client initialization process. In other embodiments the server 2 can communicate with the client device 7 to receive display characteristics after the client device 7 (Figure 1) has established communications with the server 2 (Figure 1). In one embodiment, the process 200 can start before the client device 7 sends a signal to the server 2 indicating that it is ready to receive video data (Figure 7, state 74), for example, upon an initial communication between the server 2 and the client device 7. Alternatively, the process 200 can start at a time after the initial communication between the server 2 and the client device 7, for example, before or at state 76 (Figure 7).

Beginning in a state 202, the server 2 determines the display characteristics of the client device 7. The characteristics can include information on the display type of the client device 7, for example, whether the display of the client device 7 is a bi-stable display, such as the display array 30 of Figure 3A. The server 7 can determine the display characteristics of client device 7 in several ways. In one embodiment, the server 2 can be pre-programmed with information that describes characteristics of displaying information on the display of the client device 7 In another embodiment, the display characteristics of the display device 7 can be identified to the server 2 via the link 8 (Figure 1), for example, by communicating an identifier of the client device 7to the server 2. The server 2 can use the identifier of the client device 7 to determine the display characteristics of the client device 7 by indexing client device information that is stored, for example, in a table, database, or file and that is accessible to the server.

Following the characterization of state 202, in state 204 a decision is made, based upon the characteristics determined by the server 22, as to whether an associated client device 7 offers the capability of multiple operating modes or features for the display of the client device 7. If the determination is negative, for example, the client device 7 is of a conventional nature having conventional display types, the process 200 proceeds to a state 206 and the server 2 communicates with the client device 7 to operate the conventional display using it operating mode. However if the determination of state 204 is affirmative, for example, if the client device 7 includes an array 30, the process 200 continues to state 208.

In state 208, the process 200 selects and enables one or more display modes to operate the display array 30 including, for example, rip and hold, frame skip, area address, pixel(s) address, select different update rates, and/or interlace. Selection of the display mode can occur based on pre-programmed values, on user selection, or it can occur dynamically based on the video data displayed. Depending on the embodiment, in Figure 10 additional steps may be added, other steps my be added or the order of the steps may be rearranged.

The display array 30 can provide numerous operational characteristics which are different from conventional displays, including being able to operate with certain update modes and refresh rates. The following description is of certain representative embodiments of these operating features or modes. The various modes can operate individually as well as in combination with another mode. The described modes or features are particular embodiments of one way of delineating the operation of a display array 30.

One mode that can be selected for operating the display array 30 is referred to herein as a "rip-and-hold" mode of operation. In one embodiment of the rip-and-hold mode, information, e.g., video data, is sent from the server 2 to the client device 7, and a frame depicting at least a portion of the information is rendered or "ripped" as an image on the display. "Ripped" as used herein, refers to rendering any data as an image on the display array 30, not just vector-based data. Because display array 30 does not require a constant refreshing of conventional displays, the display array 30 can "hold" this ripped frame for an extended period of time. In some embodiments, the information is displayed on the entire viewing area of the display array 30, while in other embodiments the information is displayed on a portion of the display array 30, for example, in a partitioned area of the display array 30. The rip-and-hold mode can be performed in an asynchronous and/or aperiodic manners providing additional flexibility in the use of the display array 30.

A second display mode or feature can comprise a "frame-skip" mode or feature for refreshing the display. Because bi-stable displays, as do most flat panel displays, consume most of their power during frame update, it is desirable to be able to control how often a bi-stable display is updated in order to conserve power. For example, if there is very little change between adjacent frames of a video stream, the display array may be refreshed less frequently with little or no loss in image quality. As an example, image quality of typical PC desktop applications, displayed on an interferometric modulator display, would not suffer from a decreased refresh rate, since the interferometric modulator display is not susceptible to the flicker that would result from decreasing the refresh rate of most other displays. Thus, during operation of certain applications, the PC display system may reduce the refresh rate of bi-stable display elements, such as interferometric modulators, with minimal effect on the output of the display.

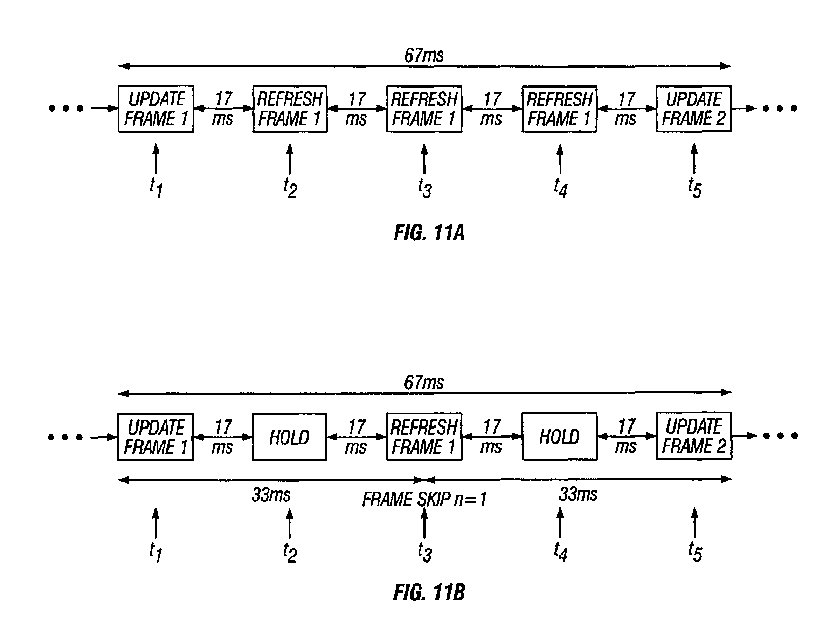

Figures 11A and 11B illustrate a frame-skip mode for refreshing video data. Figure 11A illustrates an operation of displaying video data of a conventional display type. Figure 11B illustrates one embodiment of the frame-skip feature for refreshing video data of, for example, a system as shown in Figure 3A comprising an display array 30. In particular, Figure 11A illustrates displaying an arbitrary portion of video data being received by the client device 7 at a rate of approximately 15 Hz, i.e., at a period of approximately 67 milliseconds between new frames of the video. The display is updated with a new Frame 1 at time *t*₁, and then Frame 1 is refreshed at a rate of approximately 60 Hz (a rate typically used in conventional displays). Accordingly, after the update of the new Frame 1, the conventional display refreshes Frame 1 approximately every 17 milliseconds. Figure 11A illustrates that Frame 1 is updated at time *t*₁ and then refreshed three times at times *t*₂, *t*₃, and *t*₄. Then, the display array 30 is updated with a Frame 2 at time *t*₅. Frame 2 can be subsequently refreshed in the same manner as Frame 1.

As illustrated in Figure 11B, a client device 7, for example, the embodimentof a client device shown in Figure 3A, can employ a frame-skip refresh feature to optimize the use of the display array 30 by, for example, lowering the power requirements of the display array 30. As illustrated in Figure 11B, the frame-skip refresh value is set to 1, and an update of Frame 1 occurs at time *t*₁. Approximately 17 milliseconds later at time *t*₂, when a conventional display would refresh this frame (as shown in Figure 11A at time *t*₂), the refresh is skipped and displayed Frame 1 continues to be displayed (e.g., the display, or the relevant portion of the display if partitioned, does not change) so that the display array 30 can be said to be in a "hold" state. As the frame-skip refresh value has been set to 1 in this embodiment, at the next indicated refresh time *t*₃ the display array 30 is refreshed with Frame 1. Approximately 17 milliseconds later, at the next refresh time *t*₄*,* the currently displayed Frame 1 again continues to be displayed (e.g., in the "hold" state). At time *t*₅ the display array 30 is updated with the next frame, Frame 2, which can be refreshed and updated in a similar refresh-update process as done for Frame 1. Thus in this embodiment, the display process skips every other refresh procedure and, to a first order approximation, can effect a power and overhead savings of approximately one-half. In other embodiments, other frame-skip refresh values can be used, such as skip two, three, etc., frames, skip one then skip two, then skip one, etc., depending on the requirements of a particular application. Such a frame-skip refresh process is undesirable with conventional display technologies as the image quality seen by a viewer significantly degrades if refreshes are not performed in a timely manner (e.g., typically 60-75 Hz).

In another embodiment of reducing a display refresh rate to reduce power requirements, if a display device has a refresh rate that is higher than the frame rate of the display feed, the display array 30 can reduce the refresh rate to be equal to or less than the frame rate of the display feed. While reduction of the refresh rate is not possible on a typical display, such as a LCD display, a bi-stable display, such as a display array 30, can maintain the state of the pixel element for a longer period of time and, thus, may reduce the refresh rate when necessary. As an example, if a video stream being displayed on a PDA has a frame rate of 15Hz and the bi-stable PDA display is capable of refreshing at a rate of 60 times per second (having a refresh rate of 1/60 sec = 16.67 ms), then a typical bi-stable display may update the display with each frame of video data up to four times. For example, a 15Hz frame rate updates every 66.67 ms. For a bi-stable display having a refresh rate of 16.67 ms, each frame may be displayed on the display device up to 66.67 ms / 16.67 ms = 4 times. However, each refresh of the display device requires some power and, thus, power may be reduced by reducing the number of updates to the display device. With respect to the above example, when a bi-stable display device is used, up to 3 refreshes per video frame may be removed without affecting the output display. More particularly, because both the on and off states of pixels in a bi-stable display may be maintained without refreshing the pixels, a frame of video data from the video stream need only be rendered on the display device once, and then maintained until a new video frame is ready for display. Accordingly, a bi-stable display may reduce power requirements by rendering each video frame only once.

In one embodiment, frames of a video stream are skipped, based on a programmable "frame skip count." Referring to Figure 3A, in one embodiment of a bi-stable display, a display driver, such as array driver 22, is programmed to skip a number of refreshes that are available to the bi-stable display, the interferometric modulator display array 30. In one embodiment, a register in the array driver 22 stores a value, such as 0, 1, 2, 3, 4, etc, that represents a frame skip count. The driver may then access this register in order to determine the frequency of refreshing the display array 30. For example, the values 0, 1, 2, 3, and 4, may indicate that the driver updates the display array 30 every frame, every other frame, every third frame, every fourth frame, and every fifth frame, respectively. In one embodiment, this register is programmable through a communication bus (of either parallel or serial type) or a direct serial link, such as via a SPI. In another embodiment, the register is programmable from a direct connection with a controller, such as the driver controller 29. Also, to eliminate the need for any serial or parallel communication channel beyond the high-speed data transmission link described above, the register programming information can be embedded within the data transmission stream at the controller and extracted from that stream at the driver.

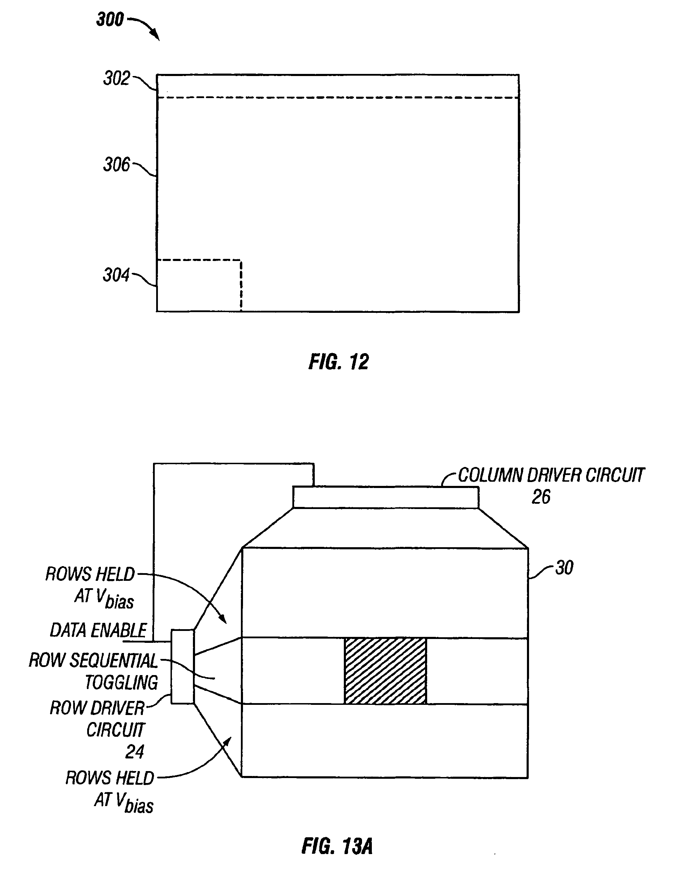

Another display mode or feature that can be selected by the process 200 includes an area address or display partitioning mode. As previously described, as the display array 30 does not require the constant frequent refreshing of conventional displays, the display array 30 can be partitioned into two or more areas. Using area addressing, each area or partition can be updated separately, for example, one partition of the display array 30 that displays infrequently changing data can be updated infrequently, and another partition of the display array 30 that displays frequently changing data can have a corresponding frequent update rate. For example, Figure 12 illustrates, in plan view from the perspective of a viewer, one embodiment of an interferometric modulator display 300, which is similar to the display array 30 shown in Figure 3A, but the interferometric modulator display 300 (Figure 12) has been partitioned into a first field 302, a second field 304, and a third field 306, according to this embodiment. In these embodiments, the different fields of the interferometric modulator display 300, such as the first, second and third fields, 302, 304, 306, may be treated in a separate and different manner with respect to updating images displayed in the different fields 302, 304, 306 depending upon the nature of the images which are displayed in the respective fields 302, 304, 306.

For example, in one embodiment, the first field 302 can display a toolbar having multiple icons corresponding to different operational features which a device, including the interferometric modulator display 300, can provide. It will be appreciated following a consideration of the description of the various embodiments, that the interferometric modulator display 300 can be incorporated into a variety of electronic devices including, but not limited to, cellular telephones, personal digital assistants (PDAs), text messaging devices, calculators, portable measurement or medical devices, video players, personal computers, and the like. Thus, in one embodiment the first field 302 can portray images corresponding to a toolbar having a plurality of icons which, during use, retain a constant configuration and location with respect to the interferometric modulator display 300, except perhaps a change of the coloration or highlighting of a particular icon in the first field 302 upon selection of the corresponding function. Thus, images displayed in the first field 302 of the interferometric modulator display 300, would typically require relatively infrequent updating or no updating in particular applications.

A second field 304 can correspond to a region of the interferometric modulator display 300 having significantly different upgrade demands than images portrayed in the first field 302. For example, the second field 304 may correspond to a series of video images which are portrayed on the interferometric modulator display 300 indicating a much higher update rate, such as at approximately 15 Hz corresponding to a video stream. Thus, the update requirements for images portrayed in the first field 302 could be of an infrequent aperiodic nature, such as substantially no updating during use if the image is constant or relatively infrequent aperiodic updating when, for example, a user selects an icon to activate a corresponding operational feature of a device incorporating the interferometric modulator display 300. However, the update requirements for images in the second field 304, would be of a generally periodic nature corresponding to the periodic framing of video data displayed in the second field 304, however, the updating of images displayed in the second field 304 can be readily conducted in an asynchronous manner with respect to updates provided for images in the first field 302. Furthermore, the fields may be overlapping, i.e., one field is designated as being on top of the other and covers the overlapped portion of the underlying field.

Images displayed in the third field 306 can have yet other update requirements different from those of either the first field 302 or the second field 304. For example, in one embodiment, the data displayed in the third field 306 can comprise text, such as e-mail or news content, through which a user of the device may periodically scroll. In such an embodiment, frequent updating of the data in the third field 306 can be necessary corresponding to the users' viewing requirements, for example, during scrolling. However, typically there can also be relatively long periods during which the same image is constantly displayed in the third field 306 as the user reads the information displayed. During these periods, no updating of the display is necessary. Accordingly, the display 300 can support update characteristics which are significantly time varying, for example, periods of substantially no updating while the displayed image is static and periods of relatively high updating when the image is changing. It will also be appreciated that the updating of the images displayed in the third field 306 can also be performed in an asynchronous manner with respect to the updating of data in the first and second fields 302, 304.

In certain embodiments, the interferometric modulator display 300 can also provide different update schemes in addition to different update rates. For example, the first field 302 can be updated in a similar manner to the progressive scan type drive schemes. The second field 304 could be driven with waveforms similar to those used for the first field 302, however in an interlaced row scan manner to reduce power consumption. Yet another embodiment is to drive the third field 306 in a pixel at a time. This embodiment can be advantageously employed when successive frames of data exhibit a relatively high degree of frame to frame correlation. Thus the update can be limited to those pixels changing states. Partitioning of an interferometric modulator display is further described in the aforementioned related Application No. 11/096,546, titled "System Having Different Update Rates for Different Portions of a Partitioned Display."

Another display mode or feature that can be selected by the process 200 includes addressing individual pixels or groups of pixels, referred to herein as "pixel addressing." As previously described above, an advantageous feature of an display array 30 is that it does not require the constant refreshing of its display, as do conventional displays. In one embodiment of pixel addressing, the process 200 can perform the above-described rip-and-hold functionality and display an image on the interferometric modulator display 30. Then, the process 300 can dynamically evaluate incoming data, and determine a change vector corresponding to those particular pixels which change between subsequent frames, and address and update only those pixels which are changing while holding the remainder at their previously set state. Thus, for example when the display array 30 is portraying a relatively constant background with a pointer or cursor moving across the displayed image, only a relatively small proportion of the overall displayed image needs to be updated (e.g., the pixels corresponding to the movement of the cursor), again significantly reducing the system overhead and power expenditure consumed by the client device 7.

Figure 13A is a schematic diagram illustrating an array driver, such as the array driver 22 shown in Figure 3A, that is configured to use an area update optimization process. As an exemplary embodiment, the circuitry referred to here is shown in Figure 3A. The array driver 22 includes a row driver circuit 24 and a column driver circuit 26. In the embodiment shown in Figure 13A, circuitry is embedded in an array driver 22 to use a signal that is included in the output signal set of a driver controller 29 to delineate the active area of the display array 30 being addressed. The signal to delineate the active area is typically designated as a display enable. The active area of the display array 30 can be determined via register settings in the driver controller 29 and can be changed by the processor 21 (Figure 3A). The circuitry embedded in the array driver 22 can monitor the display enable signal and use it to selectively address portions of the display. Typically display video interfaces in addition utilize a line pulse or a horizontal synchronization signal, which indicates the beginning of a line of data. A circuit which counts line pulses can determine the vertical position of the current row. When the refresh signals are conditioned upon receiving a display enable from the processor 21 (signaling for a horizontal region), and upon the line pulse counter circuit (signaling for a vertical region) an area update function can be implemented. The signal the row driver circuit 24 asserts, for example, -ΔV, 0, or +ΔV voltage levels, is determined by the value of a line pulse counter and when display enable is enabled. For a particular row, if a line pulse is received and the display enable signal is not active, the row is set at the same voltage level it is currently at, but a counter is incremented. When the display enable signal is active and the line pulse is received, the row driver circuit 24 asserts the desired voltage level on the row. If the line pulse counter indicates that the row is in an area of the display to be updated, it asserts the desired signal on the row. Otherwise, no signal is asserted.

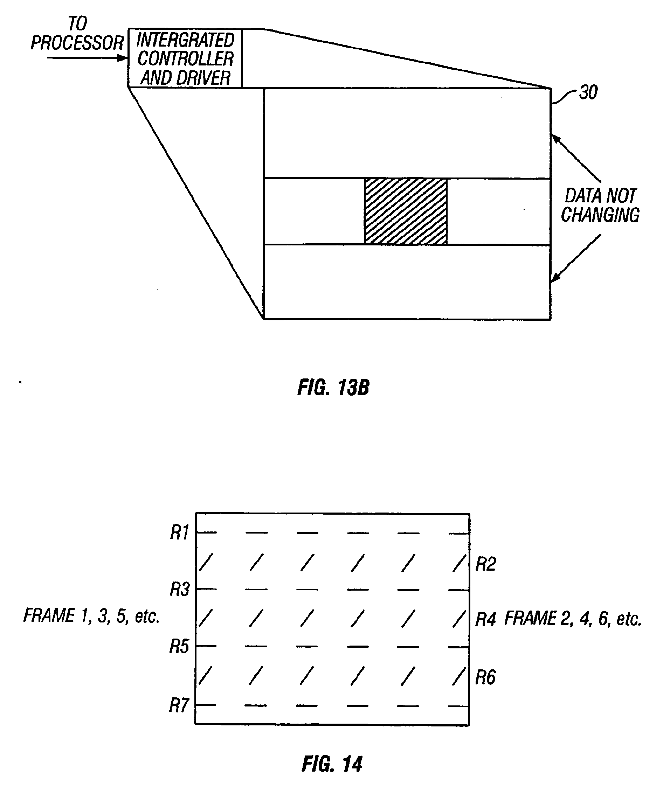

Figure 13B is a schematic diagram illustrating a controller that can be integrated with an array driver. In the embodiment shown in Figure 13B, a driver controller is integrated with an array driver. Specialized circuitry within the integrated driver controller and driver first determines which pixels and hence rows require refresh, and only selects and updates those rows that have pixels that have changed. With such circuitry, particular rows can be addressed in non-sequential order, on a changing basis depending on image content. This embodiment is advantageous because only the changed video data needs to be communicated through the interface between the integrated controller and driver circuitry and the array driver circuitry refresh rates can be reduced between the processor and the display array 30. Lowering the effective refresh rate required between processor and display controller lowers power consumption, improves noise immunity and reduces electromagnetic interference issues for the system.

Another display mode that can be advantageously implemented on a bi-stable display is an interlacing mode of displaying video data. In some embodiments, the bi-stable array can be the display array 30. In some embodiments, video data is coded in an interlaced manner for compatibility with existing display technologies, such as the CRTs of conventional televisions. Typically, interlacing refers to a video data display methodology where a conventional display is updated or refreshed by alternately writing all the odd rows of a display for a first frame, and then in the next successive frame, writing all the even number rows for the next frame. For example, as illustrated in Figure 14, for video data frames 1 ― 6, the odd rows R1, R3, R5, and R7, etc., are written for frames 1, 3, and 5, and the even rows R2, R4, R6, etc., are written for frames 2, 4, and 6. Thus, in an interlaced format alternating halves of the total display matrix are refreshed or updated in an alternating manner such that for example each odd or even row is updated or refreshed every other cycle. Because of the relatively frequent constant refreshing required with conventional displays, in many applications this raw interlaced data is processed into what is known as a progressive format merging the interlaced video data in an interpolative manner.

In contrast, because the bi-stable display, for example, the interferometric modulator display 30, does not require constant frequent refreshing the process 200 can directly support interlaced data and the display array 30 itself maintains a previous frame of data throughout the refreshing of the interleaved data set.

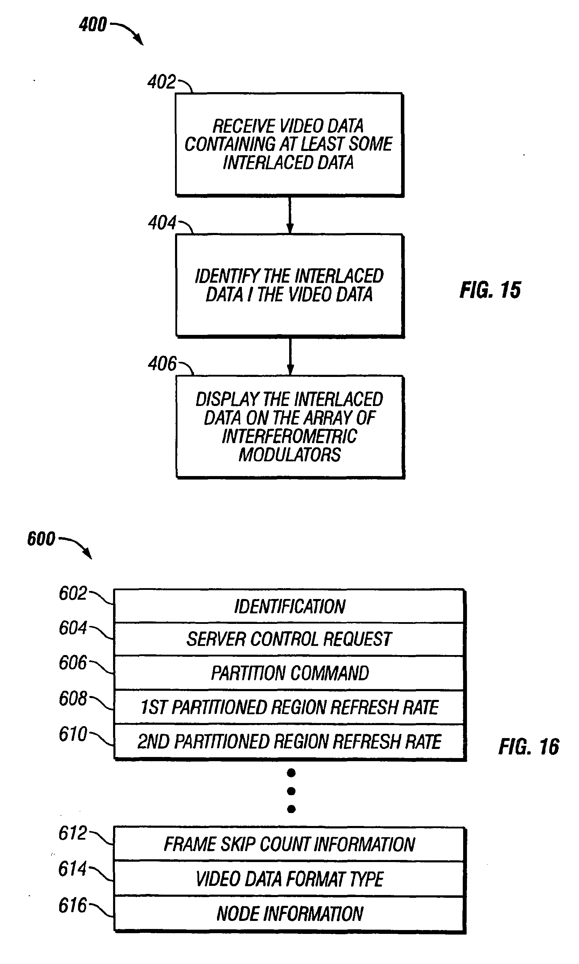

Figure 15 further illustrates displaying interlaced data on a display comprising an array of interferometric modulators. In Figure 15, a process 400 runs on a client device 7 for example, the client device 7 shown in Figure 1, to display interlaced data from a server 2. In state 402, the client device 7 receives video data containing at least some interlaced data from the server 2. There are various ways that the interlaced data can be identified to the client device 7. In one embodiment, interlaced data information is sent to the client device 7 as part of the server control information describing the video data and its contents. For example, Figure 16 illustrates one embodiment of a server-provided message control information that includes identifying information for the interlaced video data, and other display information. The server-provided message 600 can include content such as a video data format type 614 which can be used by the server 2 to inform the client device 7 that the server 2 is providing interlaced video data to the client device 7. In state 404, the client device 7 identifies the interlaced data in the video data using server control information, such as shown in Figure 16.

Referring now to Figure 16, in some embodiments, the server-provided message 600 can also include other information related to displaying video data on the client device 7. In the embodiment shown in Figure 16, the message 600 includes an identification segment 602 that identifies the type of content being sent to the client device 7. For example, if the content is a phone call, the caller's phone number may be provided. If the content is a media from a web-site, an indicia of the identity of the web-site may be provided via the identification segment 602. The server control request 604 is a request from the server for the client to grant the server control over its display and refresh and/or update rates. The partition command 606 includes the instructions to the client as to how its display (not shown) is to be partitioned. The partition command 606 may include rows or columns of the display indicating partitioned regions of the display. The first partition refresh rate value 608 indicates the rate at which content displayed in the display's first partition is updated or refreshed, and the second partition refresh rate value 610 indicates the rate at which the content displayed in the display's second partition is updated or refreshed. In some embodiments, the server message 600 also includes frame skip count information 612, video data format type 614 and/or other information such as node information 616. The frame skip count information 612 can be used to determine whether to display a frame of video data, as discussed hereinabove. The video data format type 614 can be used by the server 2 to indicate to the client device 7 what type if data is being sent from the server 2, for example, interlaced data. The node information 616 in the message can be used to indicate to the client device 7 node or network device information relating to the data being sent from the server 2.

The process 400 then continues to state 406, where the process 200 displays the interlaced data on a display array 30, as described above. Depending on the embodiment, states of Figure 15 can be removed, added, or rearranged.

Accordingly, the process 200 utilized with a client device 7 having an interferometric modulator display can provide significant additional flexibility and bandwidth savings to users. Additionally, again referring to Figure 1, the server 2 can readily determine the appropriateness and efficacy of these various operating modes or features and select one or more as desired to either increase the functionality to the end user and/or reduce the bandwidth and power consumed to provide comparable functionality to a given client device 7 thus increasing the availability of services to further client devices 7. Embodiments of the invention provide a display system wherein the server 2 can determine the characteristics of a client device display and enable one or more display features or modes of the display. In another embodiment, the client device 7 is configured to selectively enable one or more display features or modes in accordance with the characteristics of data to be displayed on the display. A link 8 between the client device 7 and server 2 is, in certain embodiments, at least partially a bi-directional link. This provides the advantage that the client device 7 can inform or provide data indicative of the characteristics of the client device 7 to the server 2. Thus, in certain embodiments, the server 2 may be in communication via a plurality of links 8 with a plurality of client devices 7 and the plurality of client devices 7 can include devices having conventional displays and operating under the constraint thereof as previously described as well as one or more client devices 7 including one or more interferometric modulator displays 30 offering the operational advantages described herein. Thus, the server 2 can be informed in an interactive manner as to the nature of the client device 2 thereby enabling the system 1 to improve the operation both of the server 2 as well as the plurality of client devices 7 enabling the system 1 to exploit the advantages of interferometric modulator displays in a dynamic manner.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. As will be recognized, the present invention may be embodied within a form that does not provide all of the features and benefits set forth herein, as some features may be used or practiced separately from others.

## Claims

1. A method of displaying information on a display having an array of interferometric modulators, comprising:
receiving video data at a device having an interlaced mode of displaying data and a non-interlaced mode of displaying data;
identifying a portion of the video data as interlaced data and a portion of the video data as non-interlaced data;
partitioning the array of interferometric modulators into two or more regions; and
displaying the interlaced video data in a first region of the display and displaying the non-interlaced data on a second region of the display.

2. The method of Claim 1, wherein receiving video data comprises receiving video data at the device over a communications network.

3. The method of Claim 1, wherein the interlaced data and the non-interlaced data are displayed concurrently.

4. The method of Claim 1, wherein receiving video data comprises receiving video data from an application running on the device.

5. The method of Claim 1, wherein identifying at the device a portion of the video data as interlaced data comprises using information received over a communications network.

6. The method of Claim 1, wherein displaying the interlaced data comprises:
displaying a first subset of rows of a video frame of interlaced data during a first time period; and
displaying a second subset of rows of the video frame during a second time period while continuing to display the first subset of rows.

7. The method of Claim 1, wherein displaying the interlaced data comprises displaying a first half of a frame of interlaced data on the array during a first display refresh and displaying a second half of the frame of interlaced data on the array during a second display refresh.

8. The method of Claim 7, wherein displaying the second half of the frame of interlaced data during a refresh cycle comprises continuing to display the first half of the frame of interlaced data on the array during the second display refresh.

9. The method of Claim 1, wherein the array comprises pixels, and displaying the interlaced data on an array of interferometric modulators comprises updating only the pixels that have changed from a frame of previously displayed video data.

10. The method of Claim I, wherein the array of interferometric modulators is partitioned into at least two regions, and an update rate of the two regions is different.

11. The method of Claim 1, wherein an update rate of the interlaced data is dynamically determined using the content of the interlaced data.

12. The method of Claim 1, wherein an update rate of the interlaced data is determined using a user input value.

13. The method of Claim 1, wherein an update rate of the interlaced data is determined using a frame skip count.

14. A method of displaying information on a display having an array of interferometric modulators, comprising:
determining at a server the characteristics of the display;
selecting one or more display modes for the display based on the characteristics of the display; and
transmitting video data to the display over a communications network, the video data being configured for display in the selected display mode.

15. The method of Claim 14, wherein a selected display mode is rip and hold.

16. The method of Claim 14, wherein a selected display mode is frame skip count.

17. The method of Claim 14, wherein a selected display mode updates changes to the video data displayed on the array on an area-by-area basis.

18. The method of Claim 14, wherein a selected display mode updates the video data displayed on the array on a pixel-by-pixel basis.

19. The method of Claim 14, further, comprising:
transmitting information indicative of supported display modes of a client device to a server wherein the display is incorporated in the client device;
receiving instructions from the server to operate in a selected one of the supported display modes;
receiving video data on the display using the selected display mode; and
displaying the video data on the display using the selected display mode.

20. A system of displaying information comprising: means for interferometrically modulating light;
means for determining the characteristics of the modulating means and for selecting one or more display modes for the modulating means based on the determined characteristics of the modulating means, wherein said determining means and selecting means are disposed in a system in data communication with the modulating means; and
means for transmitting video data to the modulating means, the video data being configured for display in the selected display mode.

21. The system of Claim 20, wherein the modulating means comprise a display having an array of interferometric modulators.

22. The system of Claim 20 or 21, wherein the determining and selecting means comprise a server.

23. The system of Claim 20, 21, or 22, wherein the transmitting means comprise a network.

24. The system of Claim 20, further comprising:
a processor that is in electrical communication with said modulating means, said processor being configured to process image data; and
a memory device in electrical communication with said processor.

25. The system of Claim 24, further comprising:
a first controller configured to send at least one signal to said modulating means; and
a second controller configured to send at least a portion of said image data to said first controller.

26. The system of Claim 24, further comprising an image source module configured to send said image data to said processor.

27. The system of Claim 26, wherein said image source module comprises at least one of a receiver, transceiver, and transmitter.

28. The system of Claim 24, further comprising an input device configured to receive input data and to communicate said input data to said processor.

29. The system of Claim 20, further comprising:
means for transmitting information to a server, wherein the transmitting information indicates supported display modes of a client device, and wherein the modulating means is incorporated in the client device;
means for receiving instructions from the server to operate in a selected one of the supported display modes;
means for receiving video data on the modulating means using the selected display mode; and
means for displaying the video data on the modulating means using the selected display mode.

30. The system of Claim 29, wherein the transmitting means comprise a processor coupled to the modulating means and configured to transmit the display mode information via a network between the processor and the server.

31. The system of Claim 29 wherein the receiving instructions means comprise a processor coupled to the display and configured to receive the instructions via a network.

32. The system of Claim 29, wherein the receiving video data means comprise a processor coupled to the display, said processor configured to receive video data via a network.

33. The system of Claim 29, wherein the displaying means comprise a display having an array of interferometric modulators.

34. A system for displaying video data, the system comprising:
means for interferometrically modulating light; and
means for driving the modulating means with interlaced and non-interlaced video data, wherein the driving means displays the video data in a first region of the modulating means, and wherein the driving means displays non-interlaced video data in a second region of the modulating means.

35. The system of Claim 34, wherein the modulating means comprises an array of interferometric modulators.

36. The system of Claim 34 or 35, wherein the driving means comprises an array driver.

37. The system of Claim 34, wherein the driving means is further configured to receive video data which includes data in an interlaced format, to identify a portion of the video data that is in interlaced format and to display the identified video data in an interlaced format on the modulating means.

38. The system of Claim 34, wherein the driving means displays the interlaced data in a first region of the modulating means, and wherein the driving means displays non-interlaced video data in a second region of the modulating means.

39. The system of Claim 34, wherein the driving means selectively skips selected frames based upon a frame skip count.

40. The system of Claim 34, further comprising:
a processor that is in electrical communication with the modulating means, said processor being configured to process image data; and
a memory device in electrical communication with said processor.

41. The system of Claim 40, further comprising a controller configured to send at least a portion of the video data to said driving means for display on the modulating means.

42. The system as recited in Claim 40, further comprising an image source module configured to send said image data to said processor.

43. The system as recited in Claim 42, wherein said image source module comprises at least one of a receiver, transceiver, and transmitter.

44. The system as recited in Claim 40, further comprising an input device configured to receive input data and to communicate said input data to said processor.

45. A method of manufacturing a system for displaying video data, comprising:
providing a display comprising an array of interferometric modulators; and
providing an array driver electrically connected to the display, the array driver configured to concurrently display interlaced and non-interlaced video data in separate portions of the array.

46. A system for displaying video data manufactured by the method of Claim 45.

47. A method of manufacturing a system for displaying video data on a display of interferometric modulators, comprising:
providing a display having a plurality of interferometric modulators;
configuring a server to transmit video data to said display, and further configuring said server to determine the characteristics of the display and to select one or more display modes for the display based on the determined characteristics of the display; and
coupling said server to said display for transmitting video data, the video data being configured for display in the selected display mode.

48. A system for displaying video data manufactured by the method of Claim 47.
